(19) **Europäisches Patentamt / European Patent Office / Office européen des brevets**

(11) **EP 2 363 781 B1**

(12) **FASCICULE DE BREVET EUROPEEN**

(45) Date de publication et mention
de la délivrance du brevet:
**15.05.2019  Bulletin 2019/20**

(51) Int Cl.:
***G06F 1/32*** *(2019.01)*

(21) Numéro de dépôt: **11154248.6**

(22) Date de dépôt: **11.02.2011**

(54) **Procédé de réduction de la consommation d'énergie d'un terminal électronique, terminal et programme d'ordinateur correspondants.**

Verfahren zur Reduzierung des Energieverbrauchs eines elektronischen Endgeräts, entsprechendes Endgerät und entsprechendes Computerprogramm

Method for reducing the power consumption of an electronic terminal, corresponding terminal and computer program

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.03.2010  FR 1051465**

(43) Date de publication de la demande:
**07.09.2011  Bulletin 2011/36**

(73) Titulaire: **Ingenico Group**
**75015 Paris (FR)**

(72) Inventeurs:
 • **NACCACHE, M. David**
 **75018 PARIS (FR)**
 • **BRIER, M. Eric**
 **26000 VALENCE (FR)**

 • **LE MARRE, M. Patrice**
 **26120 UPIE (FR)**
 • **SARRADIN, M. Jean-Louis**
 **07300 LES ETABLES (FR)**
 • **CORON, Jean-Sébastien**
 **92500 RUEIL MALMAISON (FR)**
 • **AUBANEL, Jean-Marie**
 **07130 SAINT-PERAY (FR)**

(74) Mandataire: **Vidon Brevets & Stratégie**
**16B, rue de Jouanet**
**BP 90333**
**35703 Rennes Cedex 7 (FR)**

(56) Documents cités:
**EP-A1- 1 617 315      EP-A1- 2 105 822**
**US-A- 5 913 067      US-A1- 2007 288 777**
**US-A1- 2009 300 390**

EP 2 363 781 B1

**Description**

**1. Domaine de l'invention**

Le domaine de l'invention est celui des terminaux électroniques.

Plus précisément, l'invention concerne une technique de réduction de la consommation d'énergie d'un terminal électronique, notamment un terminal de paiement électronique.

**2. Art antérieur**

On considère un tel terminal de paiement électronique, par exemple dans un commerce ou un restaurant. Un tel terminal de paiement électronique procède à plusieurs transactions dans une journée.

On connaît une technique de réduction de consommation d'énergie, qui consiste pour un tel terminal de paiement électronique à se mettre en veille, ou en « standby ».

Un inconvénient de cette technique de l'art antérieur réside dans le temps que met le terminal à se réveiller et à être prêt pour une transaction. Ce temps d'attente peut être pénalisant pour un utilisateur qui souhaite effectuer une transaction, alors que le terminal était en mode veille. Par exemple, les documents de brevets US 2007/288777, US 5913067, US 2009/300390 et EP 1617315 divulguent des exemples de temps d'attente fixe programmable selon des critères liés à l'utilisation du terminal.

Il existe donc un besoin pour une technique permettant d'optimiser la réduction de consommation d'énergie d'un terminal électronique, sans pénaliser les utilisateurs potentiels du terminal.

**3. Exposé de l'invention**

L'invention définie par la revendication 1 propose une solution nouvelle qui ne présente pas l'ensemble de ces inconvénients de l'art antérieur, sous la forme d'un procédé de réduction de la consommation d'énergie d'un terminal électronique.

Selon l'invention, un tel procédé met en oeuvre une étape de modification de la durée de temporisation pour la mise en veille du terminal après une action effectuée par et/ou sur le terminal à un instant courant, en fonction de l'appartenance de l'instant courant à une catégorie temporelle donnée, parmi au moins deux catégories temporelles prédéfinies.

Ainsi, l'invention repose sur une approche de la réduction de l'énergie consommée par un terminal électronique modifiant la durée de la temporisation de mise en veille du terminal après une action effectuée par le terminal ou sur le terminal.

En effet, pour économiser de l'énergie, de manière classique, un terminal se met en mode veille, ou « standby », automatiquement, à la fin d'une temporisation se déclenchant après chaque action effectuée par/sur le terminal. Cette temporisation peut avoir une durée fixe spécifique au terminal, ou une durée fixe programmable selon des critères liés à l'utilisation du terminal.

L'invention repose ici sur une modification de la durée de la temporisation en fonction de l'instant courant, ou plus exactement de l'appartenance de l'instant courant à une catégorie temporelle donnée, parmi au moins deux catégories temporelles prédéfinies

Ainsi, la durée de la temporisation peut être variable au cours de la journée, en fonction par exemple de la fréquence d'utilisation du terminal.

Par exemple, les catégories temporelles sont définies par au moins un paramètre appartenant au groupe comprenant :

- une plage horaire dans une journée ou une semaine ;
- au moins un jour dans une semaine ou un mois.

Par exemple, une catégorie temporelle correspond à une plage horaire, par exemple une plage d'une heure, ou de plusieurs heures, dans une journée ou une semaine.

Ainsi, la durée de la temporisation de mise en veille du terminal après une action peut être modifiée toutes les heures, en fonction par exemple de l'utilisation du terminal.

La durée de la temporisation peut également dépendre de plages horaires de plusieurs heures dans une journée, par exemple de 9h à 12h, puis de 12h à 14h et de 14h à 18h.

Selon un autre exemple, la durée de la temporisation peut dépendre du jour courant dans une semaine, par exemple les jours de semaine et le samedi.

En particulier, la modification de la durée de temporisation tient compte en outre d'un paramètre représentatif d'une tolérance estimée d'un ensemble d'utilisateurs du terminal à un délai d'exécution d'une action par et/ou sur le terminal.

Ainsi, l'invention permet de tenir également compte, en plus de l'instant courant, d'un facteur lié aux utilisateurs du terminal, et plus particulièrement à une tolérance estimée à un délai d'exécution d'une action du terminal.

En effet, lorsqu'un terminal est en mode veille au moment où un utilisateur en a besoin pour une action, cette action ne peut être exécutée par le terminal qu'après un certain délai, lié au temps que met le terminal pour sortir du mode veille. Ce délai peut être plus ou moins bien toléré par les utilisateurs et leur « degré » d'acceptation de ce délai, ou leur sensibilité à ce délai, est prise en compte par le procédé selon l'invention pour la modification de la durée de la temporisation.

Ainsi, si l'on considère par exemple que les utilisateurs sont plutôt tolérants face à un délai de sortie du mode veille du terminal, alors on pourra mettre le terminal en mode veille plus systématiquement, sans craindre de réaction négative des utilisateurs lorsqu'ils ont besoin du terminal alors qu'il est en mode veille.

Au contraire, si l'on considère par exemple que les utilisateurs sont très sensibles au délai de sortie du mode veille du terminal, alors on évitera de mettre systématiquement le terminal en mode veille, de façon à ne pas provoquer de situation où un utilisateur a besoin du terminal alors qu'il est en mode veille.

Selon l'invention, le procédé de réduction de la consommation d'énergie d'un terminal électronique comprend une phase préalable de calcul de statistiques sur le nombre d'actions effectuées par et/ou sur le terminal, pendant une période prédéterminée récurrente, délivrant une fonction $x(t)$ variable en fonction du temps et représentative d'un nombre estimé d'actions pendant la période prédéterminée.

Ainsi, l'invention met en oeuvre des statistiques sur la fréquence d'utilisation du terminal, en fonction du temps, par exemple en fonction des heures de la journée, permettant ainsi de modéliser l'utilisation du terminal par une fonction représentative du nombre d'actions effectuées par/sur le terminal en fonction du temps.

Cette fonction permet ensuite par exemple de déterminer des heures, ou des plages horaires, pendant lesquelles le terminal est très utilisé, et d'autres heures ou plages horaires pendant lesquelles au contraire le terminal n'est pas beaucoup utilisé, de façon à ce que le procédé selon l'invention puisse tenir compte de ces heures ou plages horaires pour modifier la durée de la temporisation de mise en veille.

En particulier, le procédé de réduction de la consommation d'énergie d'un terminal électronique met en oeuvre les étapes suivantes :

- comparaison, à un instant prédéterminé $t$, de la valeur de la fonction $x(t)$ avec au moins un seuil prédéterminé, noté $x_0$ ;
- détermination d'une durée de temporisation en fonction du résultat de la comparaison.

Ainsi, le procédé selon l'invention tient compte d'un seuil prédéterminé pour modifier la durée de la temporisation de mise en veille. De cette manière, lorsque le nombre d'actions est inférieur au seuil, alors la temporisation de mise en veille peut être relativement courte, alors qu'au contraire, lorsque le nombre d'actions est supérieur au seuil, alors il est préférable que la temporisation de mise en veille soit relativement longue.

Selon l'invention, le procédé de réduction de la consommation d'énergie d'un terminal électronique affecte deux durées distinctes à la temporisation, selon que $x(t)$ est inférieur ou égal au seuil prédéterminé $x_0$, ou que $x(t)$ est supérieur au seuil prédéterminé $x_0$.

Le seuil prédéterminé $x_0$ est fonction d'une valeur d'énergie $\gamma$ représentative de l'énergie consommée par le terminal pendant la période prédéterminée et d'une valeur de pénalité $\alpha$ représentative d'une tolérance estimée d'un ensemble d'utilisateurs du terminal à un délai d'exécution d'une action par le terminal.

Ainsi, selon l'invention, le seuil permettant de déterminer la durée de temporisation de mise en veille prend en considération deux paramètres, permettant à la fois de tenir compte de l'énergie consommée par le terminal et de la sensibilité des utilisateurs à un délai dans l'exécution d'une action, dû au temps de sortie de veille du terminal.

Par exemple, le seuil prédéterminé $x_0$ est égal à $\dfrac{\gamma}{\alpha}$.

Selon un aspect particulier de l'invention, le terminal est un terminal de paiement électronique et les actions sont des transactions.

Dans un autre mode de réalisation, l'invention concerne un terminal électronique conformément à la revendication indépendante 6.

Ce terminal électronique comprend des moyens de modification de la durée de temporisation pour la mise en veille du terminal après une action effectuée par et/ou sur le terminal à un instant courant, en fonction de l'appartenance de l'instant courant à une catégorie temporelle donnée, parmi au moins deux catégories temporelles prédéfinies.

En particulier, les moyens de modification de la durée de temporisation tiennent compte en outre d'un paramètre représentatif d'une tolérance estimée d'un ensemble d'utilisateurs du terminal à un délai d'exécution d'une action par le terminal.

Par exemple, le terminal est un terminal de paiement électronique et les actions consommatrices d'énergie sont des transactions.

Un tel terminal électronique est notamment adapté à mettre en oeuvre le procédé de réduction de la consommation d'énergie décrit précédemment. Il s'agit par exemple d'un terminal de paiement. Dans d'autres modes de réalisation, il peut également s'agir d'un terminal de type radiotéléphone, ordinateur portable, assistant personnel de type PDA (en anglais « Personal Digital Assistant »)...

Un autre aspect de l'invention concerne également un programme d'ordinateur téléchargeable depuis un réseau de communication et/ou enregistré sur un support lisible par ordinateur et/ou exécutable par un processeur, comprenant des instructions de code de programme pour la mise en oeuvre du procédé de réduction de la consommation d'énergie d'un terminal électronique tel que décrit précédemment.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1 présente les principales étapes du procédé de réduction de la consommation d'énergie d'un terminal électronique selon un mode de réalisation de l'invention ;
- la figure 2 illustre quatre cas de variation $\Delta P$ de la fonction $P$ de pénalité totale sur une période de temps courte, notée $\Delta T$ ;

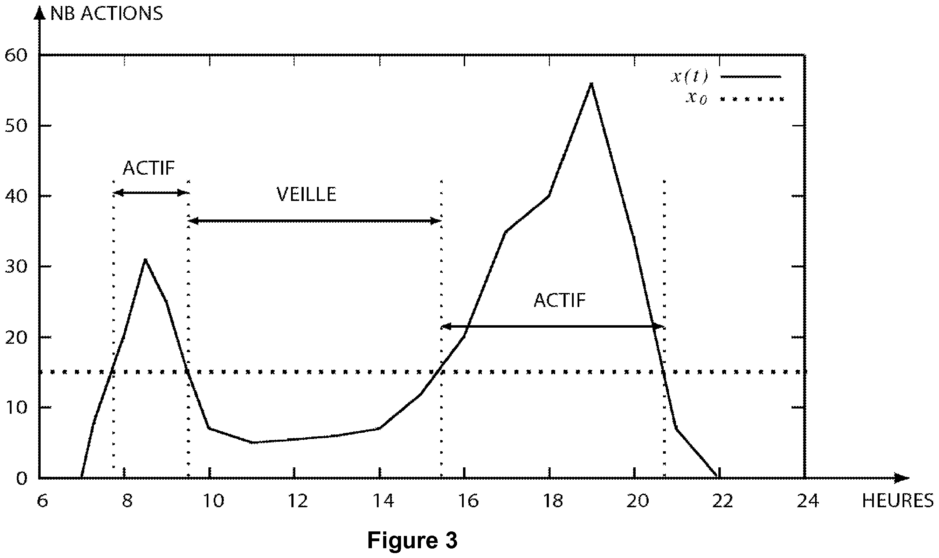

- la figure 3 illustre un exemple de fonction de distribution des actions d'un terminal sur une journée.

## 5. Description d'un mode de réalisation de l'invention

### 5.1 Principe général

Le principe général de l'invention repose sur le fait qu'un terminal électronique en mode veille ne consomme pas d'énergie et que, par conséquent, la réduction de consommation d'énergie d'un terminal électronique est liée à la durée pendant laquelle celui-ci est en mode veille.

Le principe général de l'invention repose également sur le fait que lorsqu'une action est requise par un utilisateur alors que le terminal est en mode veille, le temps de sortie du mode veille peut être pénalisant pour l'utilisateur, l'action étant retardée.

L'invention repose donc sur l'observation de la fréquence des actions, consommatrices d'énergie, effectuées par/sur un terminal électronique de façon à déterminer les moments opportuns de mise en mode veille, et sur la prise en considération d'une tolérance estimée des utilisateurs à un délai pour l'exécution d'une action. Cela revient à déterminer les moments où le fait que le terminal soit en mode veille n'est pas pénalisant pour les utilisateurs.

Par ailleurs, les moments opportuns de mise en veille sont définis par une temporisation pour la mise en veille du terminal après une action, de façon à ne pas mettre en veille un terminal pendant qu'il effectue une action.

L'invention repose donc sur une modification de la durée de la temporisation de mise en veille, en fonction de la fréquence des actions effectuées par le terminal et d'une tolérance estimée, pour un ensemble d'utilisateurs, à un délai pour l'exécution d'une action.

### 5.2 Modélisation

Dans un premier temps, un modèle de fonctionnement d'un terminal a été défini, considérant :

- $x(t)$ le nombre d'actions, consommatrices d'énergie, effectuées par/sur un terminal pendant une période prédéterminée, par exemple pendant une heure, sur un jour d'utilisation (par exemple, un terminal de paiement électronique dans un magasin, pendant les horaires d'ouverture du magasin). Cette fonction $x(t)$ peut être obtenue en effectuant des statistiques, lors d'une phase préalable d'observation de l'utilisation du terminal, par exemple sur plusieurs jours d'utilisation ;
- $\gamma$ la valeur d'énergie représentative de l'énergie consommée par ledit terminal pendant une période prédéterminée, par exemple pendant une heure. On considère que le terminal en mode veille ne consomme pas d'énergie et que la valeur de $\gamma$ par action est égale à 1 ;
- $\alpha$ la valeur de pénalité représentative d'une tolérance estimée d'un ensemble d'utilisateurs dudit terminal à un délai d'exécution d'une action par ledit terminal. On considère que si le terminal n'est pas en mode veille, aucune pénalité n'est induite dans la mesure où l'action peut être effectuée immédiatement par le terminal. Ainsi, $\alpha$ est une mesure

de la sensibilité estimée d'un ensemble d'utilisateurs à un délai dans l'exécution d'une action, dû au temps de sortie du mode veille du terminal. Une grande valeur de $\alpha$ indique que la tolérance estimée d'un ensemble d'utilisateurs est faible, et que le temps d'attente de l'utilisateur doit être réduit au minimum.

À partir de ce modèle, on considère donc qu'une séquence journalière d'actions suit une distribution des actions données par $x(t)$.

On note $E$ l'énergie totale consommée par un terminal, sur un jour, et $N$ le nombre de pénalités induites sur un jour.

On définit une fonction $P$ de pénalité totale, tenant compte à la fois de l'énergie consommée et des pénalités induites pour un jour, et pouvant s'écrire comme suit :

$$P = E + N.\alpha \qquad (1)$$

Il est à noter que si $\alpha = 0$, c'est-à-dire que l'on ne considère pas de pénalité, alors la fonction $P$ ne dépend que de la consommation d'énergie. Ainsi, pour réduire la pénalité totale, il suffit de réduire la consommation d'énergie et donc la meilleure stratégie consiste à mettre le terminal en mode veille après chaque action effectuée.

Au contraire, si on considère une grande valeur de $\alpha$, c'est-à-dire que l'on considère que les utilisateurs sont très sensibles, ou peu tolérants à un délai d'attente pour l'exécution d'une action, alors l'énergie totale $E$ devient négligeable dans l'équation (1), comparée à la valeur de la pénalité donnée par $N.\alpha$. Dans ce cas, pour réduire la pénalité totale, il suffit de réduire la pénalité et donc la meilleure stratégie consiste à laisser tout le temps le terminal en mode actif, et à ne jamais le mettre en mode veille.

Cependant, pour des valeurs « moyennes » de sensibilité estimée des utilisateurs, définir la stratégie optimale de réduction de la pénalité totale donnée par la fonction $P$ revient à définir les moments opportuns pour mettre en veille le terminal, indépendamment d'une action car le terminal sort du mode veille systématiquement sur requête d'une action, et étant donnés les paramètres $x(t)$, $\gamma$ et $\alpha$.

*5.3 Stratégie optimale*

On considère dans un premier temps une variation, notée $\Delta P$, de la fonction $P$ de pénalité totale sur une période de temps courte, notée $\Delta T$.

Conformément au modèle défini ci-dessus, cette variation $\Delta P$ comprend l'énergie consommée par le terminal sur la durée $\Delta T$ et une éventuelle pénalité si une action est requise pendant que le terminal est en mode veille.

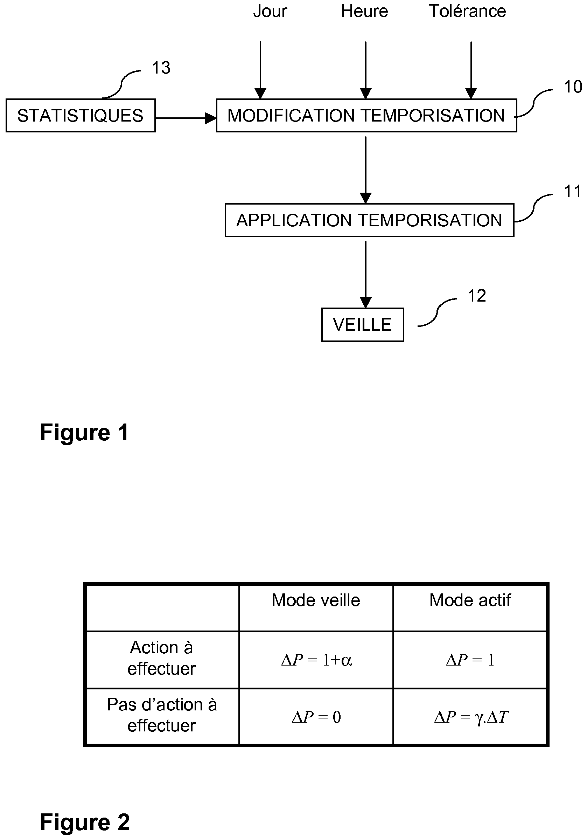

On peut distinguer quatre cas différents de variation pendant cette courte durée $\Delta T$, illustré dans le tableau de la figure 2.

Dans un premier cas, on considère que le terminal est en mode veille et qu'aucune action n'est requise. Dans ce cas, le terminal ne consomme pas d'énergie, et aucune pénalité n'est à prendre en compte, de telle sorte qu'on obtient : $\Delta P = 0$.

Dans un deuxième cas, on considère que le terminal est en mode actif (non veille) et qu'aucune action n'est requise. Par définition, l'énergie consommée par le terminal pendant $\Delta T$ est égale à $\gamma.\Delta T$ et la variation $\Delta P$ s'écrit : $\Delta P = \gamma.\Delta T$.

Dans un troisième cas, on considère que le terminal est en mode veille et qu'une action est requise. Comme défini dans le modèle ci-dessus, la consommation d'énergie $\gamma$ du terminal pendant cette action est égale à 1. De plus, une pénalité est induite du fait de l'action intervenant pendant le mode veille du terminal. La variation $\Delta P$ s'écrit alors : $\Delta P = 1+\alpha$.

Enfin, dans le quatrième et dernier cas, on considère que le terminal est en mode actif et qu'une action est requise. Aucune pénalité n'est induite et la consommation d'énergie $\gamma$ du terminal pendant cette action est égale à 1, comme déjà indiqué ci-dessus. La variation $\Delta P$ est alors : $\Delta P = 1$.

A partir de ces quatre situations, on peut calculer une moyenne de la variation $\Delta P$ pendant $\Delta T$.

Pour ce faire, on considère $p$ la probabilité qu'une action soit requise pendant $\Delta T$, donnée par : $p = x(t).\Delta T$, avec $x(t)$ le nombre d'actions par heure.

Ainsi, lorsqu'un terminal est en mode veille, on a une probabilité $p$ que la variation $\Delta P$ soit égale à $1+\alpha$, et une probabilité $1-p$ que la variation $\Delta P$ soit nulle.

La variation moyenne $\Delta P_{sb}$ de la fonction de pénalité totale en mode veille (ou « standby ») s'écrit :

$$\Delta P_{sb} = p.(1+\alpha) + (1-p).0 = (1+\alpha).x(t).\Delta T \qquad (2)$$

De la même manière, lorsqu'un terminal est en fonctionnement (mode actif), la variation moyenne $\Delta P_w$ de la fonction de pénalité totale en mode actif (ou « working ») s'écrit :

$$\Delta P_w = p.1 + (1\text{-}p).\ \gamma.\Delta T = x(t).\Delta T + (1\text{-}\ x(t).\Delta T)\ \gamma.\Delta T$$

Si l'on considère que $\Delta T^2$ est négligeable, on obtient :

$$\Delta P_w \quad (x(t) + \gamma).\Delta T \qquad\qquad (3)$$

A partir des équations (2) et (3), et cherchant à avoir une variation moyenne de la fonction de pénalité totale en mode veille inférieure ou égale à celle en mode actif, on obtient :

$$\Delta P_{sb} \leq \Delta P_w \quad \Leftrightarrow \quad (1+\alpha).x(t) \leq x(t) + \gamma,$$

et par conséquent :

$$\Delta P_{sb} \leq \Delta P_w \quad \Leftrightarrow \quad \alpha.x(t) \leq \gamma \qquad\qquad (4)$$

L'équation (4) indique donc que lorsque les paramètres $x(t)$, $\gamma$ et $\alpha$ sont tels que $\alpha.x(t) \leq \gamma$, alors la variation moyenne de la fonction de pénalité totale en mode veille est effectivement inférieure ou égale à celle en mode actif. Cela implique qu'une réduction de la fonction de pénalité totale peut être obtenue par la mise en mode veille du terminal. Pratiquement, cette stratégie optimale correspond à une période de basse fréquence des actions requises.

Au contraire, lorsque les paramètres $x(t)$, $\gamma$ et $\alpha$ sont tels que $\alpha.x(t) > \gamma$, alors la variation moyenne de la fonction de pénalité totale en mode veille est supérieure à celle en mode actif. Cela implique qu'il est plus avantageux de laisser le terminal en mode actif, plutôt que de le mettre en mode veille, même en l'absence de requête d'action. Pratiquement, cette stratégie optimale correspond à une période de haute fréquence des actions requises.

Ainsi, si l'on définit un seuil de fréquence d'actions, noté $x_0$, tel que :

$$x_0 = \frac{\gamma}{\alpha},$$

une stratégie optimale de réduction de la consommation d'énergie d'un terminal consiste à passer le terminal en mode veille lorsque la fonction $x(t)$ est inférieure ou égale au seuil $x_0$ et à laisser le terminal en mode actif, lorsque la fonction $x(t)$ est supérieure au seuil $x_0$.

Ainsi, une stratégie optimale de réduction de la consommation d'énergie d'un terminal consiste à choisir une durée de temporisation de mise en veille relativement courte, lorsque la fonction $x(t)$ est inférieure ou égale au seuil $x_0$ et à choisir au contraire une durée de temporisation de mise en veille relativement longue, lorsque la fonction $x(t)$ est supérieure au seuil $x_0$.

Il est à noter que cette stratégie optimale ne dépend pas de la valeur E de l'énergie consommée par un terminal par action, que l'on prenne $E = 1$ ou pas. En effet, que le terminal soit en mode veille ou non, la consommation d'énergie pour une action est la même.

Enfin, cette stratégie s'avère optimale si on cherche à minimiser la variation de la fonction de pénalité totale à chaque instant $t$.

*5.4 Description d'un mode de réalisation*

On présente maintenant, en relation avec la figure 1, les principales étapes du procédé de réduction de la consommation d'énergie d'un terminal électronique, basée sur la stratégie optimale décrite ci-dessus, à partir du modèle également décrit ci-dessus.

En particulier, on considère ici que le terminal électronique est un terminal de paiement électronique et que les actions requises sont des transactions.

Comme déjà décrit ci-dessus, une phase préalable de statistiques 13 est mise en oeuvre, pendant une période prédéterminée récurrente, par exemple plusieurs jours d'une semaine, pour une fonction $x(t)$ variable en fonction du temps et représentative d'un nombre estimé de transactions effectuées par le terminal pendant la période prédéterminée.

Ensuite, l'application du procédé selon l'invention consiste d'abord en une première étape 10 de modification de la durée de la temporisation, tenant compte des données suivantes :

- données temporelles telles que le jour et l'heure courante ;
- une donnée représentative de la tolérance estimée d'un ensemble d'utilisateurs du terminal à un délai d'exécution d'une transaction par le terminal ;
- statistiques obtenues préalablement lors de la phase 13.

La tolérance estimée d'un ensemble d'utilisateurs peut également être obtenue par des statistiques sur des comportements d'utilisateurs, par observation de ces utilisateurs sur une période prédéterminée récurrente, ou par « sondage » de ces utilisateurs sur leur sensibilité à un délai d'attente pour effectuer une transaction. Cette tolérance estimée est variable en fonction de l'instant courant (par exemple, sur les plages horaires du midi et de fin de journée, et toute la journée du samedi, la tolérance des utilisateurs est plus faible que sur les autres plages horaires).

Ensuite, un seuil $x_0$ est calculé à partir de la donnée de tolérance et des statistiques.

Enfin, les données temporelles permettent de déterminer la catégorie temporelle de l'instant courant et ainsi de savoir si la courbe $x(t)$ se trouve au-dessus ou en dessous du seuil $x_0$ à l'instant courant. En fonction de cette comparaison, une durée de temporisation est choisie.

Ces étapes peuvent être mises en oeuvre dans le terminal lui-même, ou dans un dispositif externe, distinct du terminal, communiquant avec le terminal.

Lors d'une étape suivante 11 d'application de la durée de temporisation choisie, la durée de la temporisation modifiée est prise en compte par le terminal.

Par exemple, l'application de la durée de temporisation choisie est directement mise en oeuvre par le terminal, lorsque c'est lui qui a mis en oeuvre les étapes précédentes.

Dans une autre configuration, lorsque c'est un dispositif externe, distinct du terminal, qui a mis en oeuvre les étapes précédentes, une commande d'application de la durée de temporisation choisie est transmise au terminal, par le dispositif en question.

Selon une variante, cette commande peut consister en un changement direct de la valeur du paramètre de temporisation interne au terminal, lorsque le dispositif a directement accès au paramètre de fonctionnement du terminal.

Selon une autre variante, cette commande peut déclencher une série d'actions dans le terminal, pour modifier la valeur du paramètre de temporisation interne au terminal.

Selon un mode de réalisation de l'invention, cette étape d'application 11 peut n'être mise en oeuvre que lorsque la durée de la temporisation est différente de la durée paramétrée dans le terminal.

Ainsi, dans le cas où c'est le terminal qui a mis en oeuvre l'étape 10 de modification de la temporisation, il ne met pas à jour la durée de la temporisation, lorsque la durée de temporisation choisie à l'étape 10 est identique à celle actuellement utilisée dans le terminal.

Dans le cas où c'est un dispositif externe qui a mis en oeuvre l'étape 10, il ne transmet pas de commande d'application de la durée de temporisation choisie au terminal, si cette durée est la même que celle actuellement utilisée dans le terminal.

Une étape 12 de mise en veille du terminal intervient à l'expiration de la durée de temporisation choisie et paramétrée dans le terminal lors des étapes précédentes 10 et 11.

Selon un mode de réalisation de l'invention, une étape de « forçage » de la durée de la temporisation peut être mise en oeuvre, de façon à considérer une situation particulière se distinguant du modèle déterminé par les statistiques.

Par exemple, si le commerçant observe un comportement des utilisateurs différent de celui estimé par les statistiques (une affluence non prévue pendant une plage horaire habituellement « calme », ou au contraire une baisse significative de l'affluence pendant une plage horaire normalement estimée comme très fréquentée), celui-ci a la possibilité de modifier la durée de la temporisation de manière indépendante de la modélisation précédemment décrite et des critères pris en compte lors des étapes 10 et 11, de façon à optimiser encore la gestion de la consommation d'énergie du terminal.

Ainsi, le procédé selon l'invention permet une gestion souple et optimale de la consommation d'énergie d'un terminal électronique.

## Revendications

**1.** Procédé de réduction de la consommation d'énergie d'un terminal électronique, ledit procédé mettant en oeuvre :

- une phase préalable de calcul de statistiques (13) sur le nombre d'actions effectuées par et/ou sur ledit terminal, pendant une période prédéterminée récurrente, délivrant une fonction (x(t)) variable en fonction du temps et définissant un nombre estimé d'actions pendant ladite période prédéterminée,

- une étape de comparaison de la valeur de la fonction (x(t)) avec au moins un seuil prédéterminé ($x_0$), et de détermination d'au moins deux catégories temporelles au sein de ladite période prédéterminée associées à des valeurs de ladite fonction (x(t)) respectivement supérieures audit seuil prédéterminé ($x_0$) et inférieures ou égales audit seuil prédéterminé ($x_0$),

- une étape de modification (10) de la durée de temporisation pour la mise en veille dudit terminal après une action effectuée par et/ou sur ledit terminal à un instant courant, en fonction de l'appartenance dudit instant courant à une catégorie temporelle donnée, parmi lesdites au moins deux catégories temporelles,

le procédé étant **caractérisé en ce que** ledit seuil prédéterminé ($x_0$) est fonction d'une valeur d'énergie ($\gamma$) représentative de l'énergie consommée par ledit terminal pendant ladite période prédéterminée récurrente et d'une valeur de pénalité ($\alpha$) variable en fonction du temps au cours de la période prédéterminée récurrente et représentative d'une tolérance estimée d'un ensemble d'utilisateurs dudit terminal à un délai d'exécution d'une action par ledit terminal, une grande valeur de la valeur de pénalité indiquant que ladite tolérance estimée est faible et que le temps d'attente doit être réduit au minimum.

2. Procédé de réduction de la consommation d'énergie d'un terminal électronique selon la revendication 1, **caractérisé en ce que** lesdites catégories temporelles sont définies par au moins un paramètre appartenant au groupe comprenant :

- une plage horaire dans une période prédéterminée récurrente d'une journée ou une semaine ;
- au moins un jour dans une période prédéterminée récurrente d'une semaine ou un mois.

3. Procédé de réduction de la consommation d'énergie d'un terminal électronique selon la revendication 1, **caractérisé en ce que** ledit procédé met en oeuvre une étape de détermination d'une durée de temporisation pour chacune des au moins deux catégories temporelles en fonction du résultat de ladite comparaison.

4. Procédé de réduction de la consommation d'énergie d'un terminal électronique selon la revendication 1, **caractérisé en ce que** ledit seuil prédéterminé ($x_0$) est égal au rapport de ladite valeur d'énergie à ladite valeur de pénalité.

5. Procédé de réduction de la consommation d'énergie d'un terminal électronique selon la revendication 1, **caractérisé en ce que** ledit terminal est un terminal de paiement électronique et **en ce que** lesdites actions sont des transactions.

6. Terminal électronique, **caractérisé en ce qu'**il comprend des moyens de mise en oeuvre du procédé de la revendication 1.

7. Terminal électronique selon la revendication 6, **caractérisé en ce que** ledit terminal est un terminal de paiement électronique et **en ce que** lesdites actions consommatrices d'énergie sont des transactions.

8. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de réduction de la consommation d'énergie d'un terminal électronique selon l'une au moins des revendications 1 à 5 lorsque lesdites instructions sont exécutées par ledit terminal électronique.

**Patentansprüche**

1. Verfahren zur Reduzierung des Energieverbrauchs eines elektronischen Endgeräts, wobei das Verfahren umsetzt:

- eine vorausgehende Phase der Berechnung von Statistiken (13) über die Anzahl von Aktionen, die von und/oder auf dem Endgerät während einer wiederkehrenden vorbestimmten Zeitdauer durchgeführt werden, wobei eine variable Funktion (x(t)) in Abhängigkeit von der Zeit bereitgestellt und eine geschätzte Anzahl von Aktionen während der vorbestimmten Zeitdauer definiert wird,
- einen Schritt des Vergleichens des Wertes der Funktion (x(t)) mit mindestens einem vorbestimmten Schwellenwert ($x_0$) und des Bestimmens von mindestens zwei Zeitkategorien in der vorbestimmten Zeitdauer, die mit Werten der Funktion (x(t)) verbunden werden, die jeweils höher als der vorbestimmte Schwellenwert ($x_0$) und niedriger als oder gleich dem vorbestimmten Schwellenwert ($x_0$) sind,

- einen Schritt des Modifizierens (10) der Verzögerungszeit für das in den Standbymodus Versetzen des Endgerätes nach einer Aktion, die von und/oder auf dem Endgerät zu einem aktuellen Zeitpunkt durchgeführt wird, in Abhängigkeit von der Zugehörigkeit des aktuellen Zeitpunkts zu einer gegebenen Zeitkategorie unter den mindestens zwei Zeitkategorien,

wobei das Verfahren **dadurch gekennzeichnet ist, dass** der vorbestimmte Schwellenwert ($x_0$) von einem Energiewert ($\gamma$), der für die Energie repräsentativ ist, die von dem Endgerät während der wiederkehrenden vorbestimmten Zeitdauer verbraucht wird, und von einem Strafwert ($\alpha$) abhängig ist, der abhängig von der Zeit während der wiederkehrenden vorbestimmten Zeitdauer variabel ist und für eine geschätzte Toleranz einer Gruppe von Benutzern des Endgeräts gegenüber von einer Ausführungsverzögerung einer Aktion durch das Endgerät repräsentativ ist, wobei ein hoher Wert des Strafwerts angibt, dass die geschätzte Toleranz gering ist und dass die Wartezeit auf ein Minimum reduziert werden muss.

2. Verfahren zur Reduzierung des Energieverbrauchs eines elektronischen Endgeräts nach Anspruch 1, **dadurch gekennzeichnet, dass** die Zeitkategorien durch mindestens einen Parameter definiert werden, der zu der Gruppe gehört, umfassend:

   - eine Zeitspanne in einer wiederkehrenden vorbestimmten Zeitdauer eines Tages oder einer Woche,
   - mindestens einen Tag in einer wiederkehrenden vorbestimmten Zeitdauer einer Woche oder eines Monats.

3. Verfahren zur Reduzierung des Energieverbrauchs eines elektronischen Endgeräts nach Anspruch 1, **dadurch gekennzeichnet, dass** das Verfahren einen Schritt des Bestimmens einer Verzögerungszeit für jede der mindestens zwei Zeitkategorien in Abhängigkeit von dem Ergebnis des Vergleichens umsetzt.

4. Verfahren zur Reduzierung des Energieverbrauchs eines elektronischen Endgeräts nach Anspruch 1, **dadurch gekennzeichnet, dass** der vorbestimmte Schwellenwert ($x_0$) gleich dem Verhältnis des Energiewerts zu dem Strafwert ist.

5. Verfahren zur Reduzierung des Energieverbrauchs eines elektronischen Endgeräts nach Anspruch 1, **dadurch gekennzeichnet, dass** das Endgerät ein elektronisches Zahlungsterminal ist und dass die Aktionen Transaktionen sind.

6. Elektronisches Endgerät, **dadurch gekennzeichnet, dass** es Mittel zum Umsetzen des Verfahrens von Anspruch 1 aufweist.

7. Elektronisches Endgerät nach Anspruch 6, **dadurch gekennzeichnet, dass** das Endgerät ein elektronisches Zahlungsterminal ist und dadurch, dass die energieverbrauchenden Aktionen Transaktionen sind.

8. Computerprogrammprodukt, das von einem Kommunikationsnetz herunterladbar ist und/oder auf einem computerlesbaren Träger gespeichert ist und/oder von einem Mikroprozessor ausführbar ist, **dadurch gekennzeichnet, dass** es Programmcodebefehle für das Ausführen des Verfahrens zur Reduzierung des Energieverbrauchs eines elektronischen Endgeräts nach mindestens einem der Ansprüche 1 bis 5 aufweist, wenn die Anweisungen von dem elektronischen Endgerät ausgeführt werden.

## Claims

1. Method for reducing the energy consumption of an electronic terminal, said method implementing:

   - a preliminary phase for computing statistics (13) on the number of actions performed by and/or on said terminal during a recurrent predetermined period, delivering a function ($x(t)$) variable as a function of time and representing an estimated number of actions during said predetermined period;
   - a step of comparing the value of the function ($x(t)$) with at least one predetermined threshold ($x_0$), and a step of determining at least two temporal categories, within said predetermined period, associated to values of the function ($x(t)$) respectively greater than said predetermined threshold ($x_0$) and lower than or equal to said predetermined threshold ($x_0$);

- a step for modifying (10) the timeout-before-standby duration for said terminal after an action performed by and/or on said terminal at a current instant depending on the membership of the current instant in a given temporal category, from among said at least two temporal categories;

said method being **characterized in that** said predetermined threshold ($x_0$) is a function of an energy value ($\gamma$) representing the energy consumed by the terminal during said predetermined period and of a penalty value ($\alpha$) variable according to time during said recurrent predetermined period and representing an estimated tolerance of a set of users of the terminal to a time lag for the execution of an action by said terminal, a high value of the penalty value indicating that the estimated tolerance of a set of users is low and that the user's waiting time must be reduced to the minimum.

2. Method for reducing the energy consumption of an electronic terminal according to claim 1, **characterized in that** said temporal categories are defined by at least one parameter belonging to the group comprising:

   - a time slot in a recurrent predetermined period of a day or a week;
   - at least one day in a recurrent predetermined period of a week or a month.

3. Method for reducing the energy consumption of an electronic terminal according to claim 1, **characterized in that** it implements a step of determining a timeout duration for each of said at least two temporal categories as a function of the result of said comparison.

4. Method for reducing the energy consumption of an electronic terminal according to claim 1, **characterized in that** said predetermined threshold ($x_0$) is equal to the ratio between said energy value and said penalty value.

5. Method for reducing the energy consumption of an electronic terminal according to claim 1, **characterized in that** said terminal is an electronic payment terminal and **in that** said actions are transactions.

6. Electronic terminal **characterized in that** it comprises means for implementing the method according to claim 1.

7. Electronic terminal according to claim 6, **characterized in that** said terminal is an electronic payment terminal and **in that** said energy-consuming actions are transactions.

8. Computer program product downloadable from a communications network and/or recorded on a computer-readable carrier and/or executable by a processor, **characterized in that** it comprises program code instructions to implement the method for reducing the consumption of energy by an electronic terminal according to at least one of the claims 1 to 5 when said instructions are executed by said electronic terminal.

Jour      Heure      Tolérance

| STATISTIQUES | → | MODIFICATION TEMPORISATION |

13

10

APPLICATION TEMPORISATION

11

VEILLE

12

# Figure 1

|  | Mode veille | Mode actif |
|---|---|---|
| Action à effectuer | $\Delta P = 1+\alpha$ | $\Delta P = 1$ |
| Pas d'action à effectuer | $\Delta P = 0$ | $\Delta P = \gamma.\Delta T$ |

# Figure 2

**Figure 3**

EP 2 363 781 B1

## RÉFÉRENCES CITÉES DANS LA DESCRIPTION

**Documents brevets cités dans la description**

- US 2007288777 A
- US 5913067 A
- US 2009300390 A
- EP 1617315 A